Europäisches Patentamt

European Patent Office

Office européen des brevets

(19)

(11) **EP 0 984 087 A1**

(12) **EUROPEAN PATENT APPLICATION**

(43) Date of publication:
08.03.2000 Bulletin 2000/10

(51) Int. Cl.⁷: **D01F 6/90**, D01F 13/04, C08J 11/06

(21) Application number: 98308844.4

(22) Date of filing: 28.10.1998

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **02.09.1998 US 145250**<br><br>(71) Applicant: **Cookson Fibers, Inc.**<br>**Bristol, Virginia 24202 (US)** | (72) Inventor: **Studholme, Matthew B.**<br>**Abington, Virginia 24210 (US)**<br><br>(74) Representative:<br>**Allard, Susan Joyce et al**<br>**BOULT WADE TENNANT,**<br>**27 Furnival Street**<br>**London EC4A 1PQ (GB)** |

(54) **Method of reuse of polyamide and polyester mixed waste carpeting by addition of compatibilizer**

(57)    Polyamide and polyester mixed waste carpeting can be recycled for use in fabricating new carpeting and pile fabrics by adding a copolymer derived from an alkene monomer and an unsaturated epoxy-containing monomer as a compatibilizing agent.

EP 0 984 087 A1

Printed by Xerox (UK) Business Services
2.16.7/3.6

**Description**

The present invention relates to the recycling of mixed plastics wastes into a blend suitable for melt-spinning into carpet face yarn. More particularly, the present invention relates to the melt blending of polyamide and polyester waste materials from carpets into formulations suitable for the melt spinning of carpet yarns with similar properties to yarns of this type made from virgin polyamides.

Over the last two decades, carpets for domestic and for institutional use have been increasingly made from synthetic polymeric materials, and a major problem has arisen with disposal of such floor coverings when they reach the end of their useful life.

Disposal of such wastes can be achieved in two ways: burying in a landfill site or burning in an incinerator facility. However, landfill sites are becoming increasingly scarce and expensive to use (indeed, many states now refuse to countenance the use of valuable real estate in this way). Recent research has also suggested that landfill sites located conveniently close to urban areas are implicated in health problems within local populations. Incineration of waste is also the subject of much environmental disapproval, both by the public and in some scientific circles. Local pollution ordinances are becoming increasingly stringent, and public attitudes are hardening against the use of this approach - the so-called "NIMBY" (not in my back yard) problem. It should also be noted, from a purely technical standpoint, that the energy recovered from incineration of, waste plastics is low, particularly in terms of the volume of such scrap. In the vast majority of cases this approach will cost money rather than earn any.

As mankind has over the last few years increasingly come to the realization that petrochemicals (on which the vast majority of polymers are based) represent a finite, and dwindling resource, pressure has increased on the plastics industry to recycle used plastics rather than attempt to dispose of them. In Europe, and in some states of the United States, this practice is in fact being forced on the industry via legislation, although the difficulty in obtaining high value end products from, in particular, mixed polymers wastes is perhaps not fully appreciated by legislators.

Thus, the most favored option for dealing with waste plastics is the recycling of these into other materials and/or products. As already noted, however, this is not a simple option. Despite the public perception of "plastic" as being a single term to describe materials which are virtually identical, it is well known in the art that this is not the case, and that different types of plastics do not easily combine together to form a coherent single material. Reprocessing of mixed plastics waste streams, with no sorting of types, or addition of other materials, invariably results in materials of low end value. In many cases the cost of the equipment involved, and the energy expended, cannot be recouped in selling on the product. In order to produce materials of value to the industry from recycled materials, a great deal of expertise has to be applied, and particular waste streams, of known and consistent content, must be available.

Modern carpets generally consist of three major components: the face yarn, which may be of any fiber type, or mixtures thereof; the primary backing (to which the yarn is fixed, or into which it is woven), which is usually a woven or nonwoven fabric of a polyester or a polyolefin; and the secondary backing (the majority of the weight of the construct), which may be an olefinic sheet or foam, an elastomeric material derived from a latex, etc., and usually containing a high level of inorganic filler.

Various attempts have been made to recycle carpet scrap without prior separation of the components. JP 60 206 868 to Ikeda Bussan describes pulverizing the waste carpet, mixing with ethylene-vinyl acetate in approximately 50:50 ratio, and calendaring to form a backing sheet for carpet use. The calendaring is carried out at low temperatures, such that the fiber component does not melt but is instead merely dispersed through the product. U.S. Patent No. 5,728,741 to Collins and Aikman discloses a similar approach, although in this case the scrap is extruded at high temperature, prior to calendaring, so that all components are molten and are mixed in the melt state. Other patents refer to the recycling of unseparated carpet scrap, but using maleated polyolefins and/or ethylene-vinyl acetate as compatibilizers. See, for example, JP 05 287 139 to Teijin; JP 05 293 828 to Toyota/Mitsubishi and U.S. Patent No. 5,719,198 to Lear Corporation. U.S. Patent No. 5,626,939 to Georgia Tech takes a low energy approach by mixing well shredded carpet scrap with thermosetting resin precursors, and forming and crosslinking the result mixes into "synthetic wood."

None of the above processes results in a melt spinnable product suitable for making into fibers or yarns.

Other inventors have sought to separate the components of scrap carpets prior to recycling same as separate product streams. These mainly involve the chopping, shredding, and granulation of the carpet followed by separation of the various polymer components via cyclone, hydrocyclone or varying density liquid flotation baths. See, for example, U.S. Patent No. 5,230,473 to Hagguist and Hume, U.S. Patent No. 5,518,188 to JPS Automotive, U.S. Patent No. 5,535,945 to BASF Corporation, U.S. Patent No. 5,598,980 to Zimmer A.G. and U.S. Patent No. 5,722,603 to Allied Signal/DSM. Dissolution methods have also been suggested, e.g., 5,233,021 to Georgia Tech describes the use of a supercritical fluid approach in which variation of temperature and pressure is used to sequentially dissolve the various components of the scrap carpet. Another alternative approach used for carpets containing PA6 is the direct recovery of caprolactam from the carpet scrap as described in 5,169,870 to BASF corporation and 5,668,277 to DSM.

The above separation processes are complex in many cases, involving a number of stages, and obviously require expenditure of funds in their implementation. It may also be noted that, in many of these approaches, only one useable product is obtained from the separation process and there still remains the problem of disposing of the other residues from the production process.

Looking specifically at blends of polyesters and polyamides, a number of attempts have been made to manufacture products from these. U.S. Patent No. 5,565,158 to BASF Corporation discloses that agglomerated scrap from PA/PET bicomponent fibers can be spun into fibers without the need for compatibilizers. This is a very specific system, and in any case provides fibers which, while suitable for applications in nonwoven products, cannot be used in the manufacture of carpet face yarns, due to their unsuitable physical properties.

Other blends of polyamides and polyesters which do include specialty compatibilizers have been disclosed in the past. U.S. Patent No. 4,150,674 to Monsanto refers to a ternary blend of polyamide, polyester, and a lactam terpolymer. U.S. Patent No. 5,055,509 to Allied Signal discloses the use of aryl phosphonyl azides in this type of blend. U.S. Patent No. 5,475,058 to Polyplastics/Diacel describes a blend of a polyester, a specialty polyamide with a ratio of carboxyl to amine end groups of at least 1.5 to 1, and a copolymer consisting of a glycidyl (meth)acrylate with one of styrene, acrylonitrile or an alkyl acrylate. All of these products and processes are aimed at moldable resin blends and are not for fiber use.

There thus exists a need for a method of recycling polyester/polyamide blends, particularly from carpet scrap, which does not require complex component separation technology, and which results in a product which can be spun into high end-value carpet grade fibers and yarns.

It has been discovered that addition of an epoxy modified olefinic polymer to a blend of polyamide and polyester recovered from scrap carpet results in a melt spinnable blend from which can be spun carpet yarns with wear properties identical to those shown by the polyamide face yarns of the original carpet.

The present invention surprisingly allows the spinning of high quality carpet face yarn fibers from mixtures of polyamides and polyesters present in carpet scrap.

Most polymers pairs, even those with apparently similar structures and properties, are not miscible. In a large number of cases the two phases do not interact in any way at all, and fracture of a sample of such a blend will easily show the different polymers to be in self-contained regions with little or no interaction or adhesion between the phases. Even the use of compatibilizing additives (for a discussion of polymer-polymer compatibilization and of additives used as compatibilizers; see, L.A. Utracki, "Polymer Alloys and Blends," Hanser, Munich (1989); also see the chapter on "Polymer Blends" in Kirk-Othmer Encyclopaedia of Chemical Technology, 4th Edition, Wiley, New York (1996), Volume 19, p. 837 et seq.) tends to result only in reductions in interfacial tension between phases, and a lowering of dispersed domain size of the polymer which is the minor component in the blend. Full thermodynamic miscibility between polymer pairs is very rare, and it is even rarer to "force" such miscibility by use of additives.

Most compatibilization processes and materials result in blends which, while being suitable for injection molding or thermoforming applications, do not have the correct balance of properties, either in the molten or solid state, to be spun into fibers which could ultimately find application in carpet face yarns.

In the course of development work carried out in association with the present invention it has been found that polyolefins containing epoxy groups, either incorporated in addition copolymerization or by a grafting process on an existing olefin (co)polymer, have the effect of producing sufficient compatibilization of blends of polyamide and polyester to allow these to be spun into carpet denier fibers. Such spinning can be carried out on standard fiber spinning machinery, and under conditions well within normal parameters known to those skilled in the art. The thus formed fibers also have suitable properties to allow them to undergo subsequent processing, (e.g., drawing, heat setting, texturing, twisting, etc.), as is normally applied in the manufacture of carpet face yarns from as-spun fibers. While not wishing to be limited to any particular mechanism, it is speculated that the combination of a polyolefin chain, which is poorly compatible with both blend phases and thus will tend to congregate at the interfaces between the phases, along with epoxy side groups which are capable of interacting with both acidic and basic moieties in the two blend phases, results in a particularly strong, yet flexible compatibilization interaction.

Further to the embodiment of this invention, the polymer mixture to be recycled consists of at least one (co)polyamide and at least one (co)polyester. Examples of polyamides are thermoplastic fiber forming polyamides as exemplified by PA6, PA66, copolymers of these and their blends. Examples of polyesters are thermoplastic polyesters as exemplified by poly(ethylene terephthalate), poly(butylene terephthalate), copolymers of these, poly(ethylene terephthalate-co-adipate), poly(trimethylene terephthalate), and their blends. Both the polyamide and the polyester portions of the mixture may consist of one or more types of each class of polymer.

Preferably, the polyamide/polyester mixture is derived from a combination of polyamide face yarn and polyester primary backing material recovered from scrap carpet. The backing material recovered from scrap carpet may also be of the COLBACK type (COLBACK is a registered trademark of Akzo which is a sheath/core bicomponent fiber with PA6 as the sheath and PET as the core). The scrap carpet feedstock may result from waste generated during any stage of the manufacture of yarn or carpet, or may be recovered from used carpets. Scrap fully-formed carpet for use in the process of the invention will only require that the secondary backing be removed in order to prepare it for reprocessing. Removal of the secondary backing may be achieved at relatively low cost compared to the separation processes discussed earlier, for example, by mechanical means, or by high pressure fluid abrasion. The carpet "fraction" used in the practice of the present invention may then be shredded, agglomerated, and/or pelletized prior to melt spinning. The recovered polymer mixture is treated in a similar fashion to polyamide for the spinning process, e.g., it will be necessary to dry the feedstock to similar levels of moisture to those required in the spinning of polyamides, in order to prevent hydrolytic degradation of the melt.

Carpet constructions will vary in the proportions of their various components, and this will affect the ratio of polyester to polyamide in the mix to be blended. Mixes will contain between about 10% and about 25% by weight of polyester.

The compatibilizer utilized in the present invention consists of a copolymer formed from an alkene monomer, a comonomer with an epoxy functionalized side group, and optionally other comonomers. The epoxy group containing monomer is present at a level of about 1% to about 20% by weight, preferably about 5% to about 10%. Particularly preferred compatibilizers are ethylene-glycidyl methacrylate copolymers as exemplified by Lotader AX8840 (Elf-Atochem North America Inc., Philadelphia). Such compatibilizers are included in the inventive formulation at a level of about 5% to about 20% with respect to the total weight of the blend. Alternatively, the epoxy functionality may be grafted onto a polyolefin.

The blend of the invention may contain other additives besides the compatibilizer. Such additives may include colorants, anti-oxidants, UV stabilizers, antimicrobials, antistatic agents, flame retardants, fillers, nucleating agents, processing aids, catalysts, melt viscosity enhancers, stain resist or dye modifiers, or mixtures thereof.

Further teaching of the process of the invention is given in the following examples, which are in no way to be construed as setting any limitations on the appended claims.

EXAMPLES

The following yarn spinning, texturing, and carpet tufting methods were applied to the examples.

Yarn Spinning

Undrawn yarns were spun using a melt spinning extrusion system of a type and configuration known to those skilled in the art. The mixed polymer melt was filtered through a screen pack containing a 50 x 250 mesh screen prior to being metered to a 60 hole die with trilobal shaped holes. The 60 filaments produced were separated into 2 x 30 filament bundles, spin finish applied, and the two bundles wound up onto separate winders to produce 1850/30Y undrawn yarn.

Yarn Texturing

Four ends of the 1850/30Y undrawn yarn produced were cotextured using mechanical crimp draw-texturing at a draw ratio of 3.6 to give 2400/120Y yarn.

Carpet Tufting

The BCF yarn was tufted into a 1/10th gauge, 3/16 inch pile height level loop carpet construction and backed with an SBR latex backing, to give an approximate yarn face weight of 20 oz.

EXAMPLE 1

Natural PA6 resin of RV = 2.7 of 500 ppm water content and 4.2% of a 25% black single pigment dispersion was spun and draw-textured to give a 2400/120Y BCF yarn. The BCF yarn was tufted into carpet. The yarn and carpet properties are shown in Table 1.

EXAMPLE 2

Industrial waste mixed color solution-dyed PA6 yarn was cut up into short lengths and dried before being melt compounded back into pellet form. A 325 mesh filter screen was used to filter the melt before pelletization. The repelletized PA6 was dried to 500 ppm moisture before it was spun and draw-textured to give a 2400/120Y BCF yarn. The BCF yarn was tufted into carpet. The yarn and carpet properties are shown in Table 1.

EXAMPLE 3

Repelletized PA6 per Example 2 was melt spun with 15% of granulated copolyester primary carpet backing and draw-textured to give a 2400/120Y yarn. The BCF yarn was tufted into carpet. The yarn and carpet properties are shown in Table 1.

EXAMPLE 4

Repelletized PA6 per Example 2 was melt spun with 15% of granulated copolyester primary carpet backing and 10% of Elf Atochem Lotader AX8440, an epoxy modified polyolefin, and draw-textured to give a 2400/120Y BCF yarn. The BCF yarn was tufted into carpet. The yarn and carpet properties are shown in Table 1.

EXAMPLE 5

A multi-color 3450 denier PA6 BCF yarn was tufted into a primary backing consisting of a copolyester with no secondary backing or binder applied. The ratio of PA6 yarn to backing was approximately 85:15. The thus formed carpet was shredded, dried, and melt compounded using 325 mesh filtration and then pelletized. The pelletized carpet was dried to 500 ppm moisture then spun with an addition of 4.2% of a 25% black single pigment dispersion, followed by draw-texturing to give a 2400/120Y yarn. The BCF yarn was tufted back into a 1/10th gauge, 3/16 inch pile height level loop carpet construction and backed with an SBR latex backing, to give an approximate yarn face weight of 20 oz. The yarn and carpet properties are shown in Table 1.

EXAMPLE 6

The dried pelletized carpet utilized in Example 5 was spun with a 4.2% addition of a 25% black single pigment dispersion and 10% Lotader AX8440, followed by draw-texturing to give a 2400/120Y yarn. The BCF yarn was tufted back into a 1/10th gauge, 3/16 inch pile height level loop carpet construction and backed with an SBR latex backing, to give an approximate yarn face weight of 20 oz. The yarn and carpet properties are shown in Table 1.

TEST PROCEDURES USED IN EXAMPLES

Hot Air Shrinkage

For a 2400 denier BCF yarn, reel an 8 wrap skein using a denier wheel with a nominal perimeter of 1.125m. Measure the loop length of the skein. Hang a 15g weight from one end of the yarn skein and place in an oven set at a temperature of 250°F (121°C). After 2 minutes, remove the skein from the oven and remeasure the loop length of the skein. Calculate the shrinkage of the skein as follows:-

$$\text{Shrinkage (\%)} = 100(A - B)/A$$

where:

A = original loop length of the skein, and
B = final loop length of the skein.

Carpet Wear Testing

Tufted carpet was tested per ASTM Test Method D5252-92 to 50,000 revolutions at 70°F (21°C) and 50% RH. An Electrolux® Upright Vacuum Cleaner model LXE was used to vacuum the carpet after the test and before grading. The carpet was not vacuumed after every 2000 revolutions as detailed in the ASTM Test Method. The worn carpet samples were graded using the Carpet and Rug Institute Reference Scale A. This scale consists of four photographs numbered 1 to 4 showing gradually increasing degrees of wear, appearance deterioration or matting. A grade of 1 indicates a badly worn sample. A grade of 5 indicates that no wear has occurred. If the tested sample falls between two photographs, then a half grade is given. For example, if the degree of wear falls between two photographs, then a half grade is given. For example, if the degree of wear falls between photographs 3 and 4, then a grade of 3.5 is given. This test is known by those skilled in the art to simulate human foot traffic. One revolution of the test drum is considered to be equivalent to 8 - 12 foot traffics.

TABLE 1

| YARN PROPERTIES AND CARPET WEAR RETENTION DATA | | | | |
|---|---|---|---|---|
| EXAMPLE NUMBER | YARN HOT AIR SHRINKAGE (%) | YARN TENACITY (g/denier) | YARN ELONGATION AT BREAK(%) | CARPET WEAR APPEARANCE RETENTION RATING |
| 1 | 22 | 4.3 | 40 | 4.5 |
| 2 | 24 | 4.1 | 41 | 4.5 |
| 3 | 25 | 3.6 | 38 | 3.5 |
| 4 | 26 | 3.8 | 41 | 4.5 |
| 5 | 21 | 3.4 | 37 | 3.0 |
| 6 | 22 | 3.7 | 39 | 4.5 |

**Claims**

1.  A method of producing a yarn from waste fibrous materials suitable for fabricating carpeting and pile fabrics comprising the steps of:

    a) chopping waste fibrous materials to provide a mixture of short length material comprising 75-90% by weight of a polyamide component, and 10-25% by weight of a polyester component,
    b) adding 5 to 20% by weight of a compatibility component to said mixture, said compatibility component consisting of a copolymer derived from an alkene monomer and an unsaturated epoxy-containing monomer, and
    (c) subjecting said mixture containing said compatilizing component to a melt extrusion fiber spinning process to form yarn.

2.  A method as claimed in claim 1, wherein the polyamide component consists of PA6, PA66, copolymers of PA6 and PA66, or a mixture thereof.

3.  A method as claimed in claim 1 or claim 2 wherein the polyester component is poly(ethylene terephthalate), poly(butylene terephthalate), copolymers thereof, poly(ethylene terephthalate-co-adipate), poly(trimethylene terephthalate), or a mixture thereof.

4.  A method as claimed in any one of the preceding claims wherein the compatibilizing component comprises a copolymer of ethylene and glycidyl methacrylate.

5.  A method as claimed in any one of the preceding claims wherein the waste fibrous materials are derived from scrap carpeting.

6.  A method as claimed in any one of the preceding claims including a step of adding an adjuvant.

7.  A method as claimed in claim 6, wherein the adjuvant is an anti-oxidant, stabilizer, colorant, processing aid, catalyst, filler, nucleating agent, antimicrobial, melt viscosity enhancer, stain resist or dye modifier, or mixtures thereof.

8.  A melt blended fiber composition comprising a combination of:

    a) 75-90% by weight of a polyamide component,
    b) 10-25% by weight of a polyester component, and
    c) 5-20% by weight of a compatibilizing component consisting of a copolymer derived from an alkene monomer and an unsaturated epoxy containing monomer, in which the polyamide and polyester components of said melt blend consist of scrap fibrous materials.

9.  A fiber composition as claimed in claim 8, wherein said polyamide component consists of PA6, PA66, copolymers of PA6 and PA66, or a mixture thereof.

10. A fiber composition as claimed in claim 8 or claim 9 wherein the polyester component is poly (ethylene terephthalate), poly(butylene terephthalate), copolymers thereof, poly(ethylene terephthalate-co-adipate), poly(trimethylene terephthalate), or a mixture thereof.

11. A fiber composition as claimed in any one of claims 8 to 10 wherein the compatibilizing component consists of a copolymer of ethylene and glycidyl methacrylate.

12. A fiber composition as claimed in any one of claims 8 to 11 wherein the scrap fibrous materials are derived from scrap carpeting.

13. A fiber composition as claimed in any one of claims 8 to 11 wherein the combination additionally contains an adjuvant.

14. A fiber composition as claimed in claim 13 wherein the adjuvant is an anti-oxidant, a stabilizer, a colorant, a processing aid, a catalyst, a filler, a nucleating agent, an antimicrobial, a melt viscosity enhancer, a stain resist or a dye modifier, or mixtures thereof.

15. A fiber whenever formed from the fiber composition as claimed in any one of claims 8 to 14.

16. A fiber as claimed in claim 15, which fiber is a carpet denier fiber within the denier range of 500 to 7000.

17. A carpet, pile fabric or floor covering made using the fiber of claim 15 or claim 16.

European Patent
Office

**EUROPEAN SEARCH REPORT**

Application Number

EP 98 30 8844

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | US 5 565 158 A (SULLIVAN JAMES P ET AL) 15 October 1996 (1996-10-15) * the whole document * | 1-17 | D01F6/90 D01F13/04 C08J11/06 |
| Y | EP 0 540 120 A (DONEGANI GUIDO IST ;ENICHEM SPA (IT)) 5 May 1993 (1993-05-05) * page 2, line 51 - page 6, line 11; claims 1-14,20-33; examples 1,2 * | 1-17 | |
| A | WO 95 06684 A (MASLAND IND INC) 9 March 1995 (1995-03-09) * the whole document * | 1-17 | |

TECHNICAL FIELDS
SEARCHED      (Int.Cl.7)

D01F
C08J

The present search report has been drawn up for all claims

| Place of search | Date of completion of the search | Examiner |
|---|---|---|
| THE HAGUE | 16 December 1999 | Tarrida Torrell, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 98 30 8844

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-1999

| Patent document cited in search report | | Publication date | Patent family member(s) | | Publication date |
|---|---|---|---|---|---|
| US 5565158 | A | 15-10-1996 | CA | 2154434 A | 17-05-1996 |
| | | | DE | 19542666 A | 23-05-1996 |
| | | | IT | MI952339 A | 16-05-1996 |
| EP 0540120 | A | 05-05-1993 | US | 5296550 A | 22-03-1994 |
| WO 9506684 | A | 09-03-1995 | AU | 7407394 A | 22-03-1995 |
| | | | CA | 2170616 A | 09-03-1995 |
| | | | EP | 0719301 A | 03-07-1996 |
| | | | US | 5852115 A | 22-12-1998 |
| | | | US | 5719198 A | 17-02-1998 |

EPO FORM P0459

For more details about this annex : see Official Journal of the European Patent Office, No. 12/82